# FASCICULE DE BREVET EUROPEEN

(11) **EP 0 641 680 B1**
(45) Date de publication et mention de la délivrance du brevet: **21.05.1997**
(21) Numéro de dépôt: 94401923.1
(22) Date de dépôt: 30.08.1994
(51) Int. Cl.: B60C 25/00

(54) **Dispositif de lubrification des talons de pneus avant leur pose sur les roues**
Vorrichtung zum Schmieren von Reifen-Wulsten vor der Montage auf Räder
Device for lubricating tire beads before their positioning on wheels

(30) Priorité: 02.09.1993 FR 9310448
(43) Date de publication de la demande: 08.03.1995
(73) Titulaire: RENAULT AUTOMATION, 92109 Boulogne Billancourt (FR)
(72) Inventeur: Brunet, Raymond, F-92700 Colombes (FR)
(74) Mandataire: Ernst-Schonberg, Michel

(56) Documents cités:
- GB-A- 2 021 492
- GB-A- 2 148 828
- US-A- 3 815 653

## Description

La présente invention a pour objet un dispositif de lubrification des talons de pneus. Plus précisément, elle concerne le poste de travail précédant la pose du pneu sur la roue dans les installations de montage de roues qui se trouvent dans les usines de construction automobile.

Traditionnellement, on applique un produit lubrifiant, tel que de l'eau savonneuse, sur les talons des pneus pour faciliter leur pose sur les roues.

Cette application peut se faire soit manuellement, mais le plus souvent et de manière plus efficace, par pulvérisation. Cette pulvérisation entraine une consommation élevée et superflue de produit lubrifiant, tandis que les matériels, les installations et les sols environnants sont soumis inutilement à des projections. Ce mode opératoire est peu économique et salissant.

Le dispositif conforme à la présente invention remédie à ces inconvénients. Il est caractérisé par le fait qu'il comporte, un bâti vertical, deux pulvérisateurs de produit lubrifiant solidaires dudit bâti, respectivement fixe et mobile, qui fournissent des jets de produit lubrifiant, un élément déflecteur de jet porté par le pulvérisateur mobile, et un moyen de récupération de l'excès de produit lubrifiant.

Selon une caractéristique de l'invention les buses des pulvérisateurs délivrent un jet divergent conique.

Selon une autre caractéristique de l'invention, le déflecteur, de configuration conique, est fixé sur un support mobile verticalement et ce dernier porte le pulvérisateur du talon supérieur d'un pneu disposé horizontalement entre les deux pulvérisateurs.

Selon une autre caractéristique de l'invention, un bac de récupération de l'excès de produit lubrifiant est disposé sous le pulvérisateur du talon inférieur du pneu.

D'autres caractéristiques et avantages de l'invention apparaîtront à la lecture de la description d'un exemple de réalisation du dispositif faite en référence au dessin annexé dans lequel :
- la figure 1 est une représentation schématique fonctionnelle du dispositif.
- la figure 2 est une représentation du dispositif de la figure 1 en cours de fonctionnement.

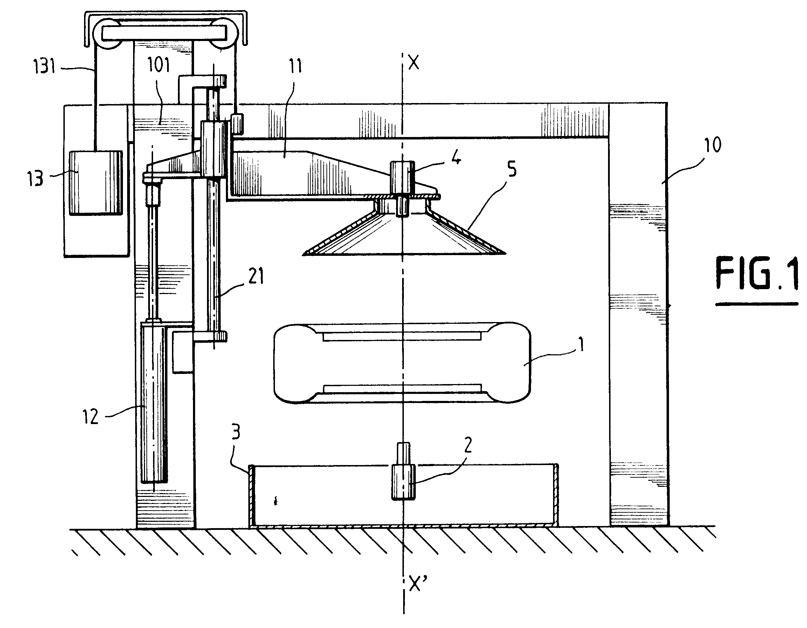

Selon la figure 1, le dispositif porté par un bâti 10, reçoit le pneu 1 en position horizontale par des moyens de manutention non représentés ici. Le pulvérisateur fixe 2 du talon inférieur est localisé au dessus d'un bac de récupération 3 de l'excès de produit lubrifiant. Le pulvérisateur fixe 2 est monté à l'aplomb d'un pulvérisateur mobile 4 du talon supérieur du pneu 1. Les pulvérisateurs 2, 4 sont à pression hydraulique à réglage séparé. Un déflecteur conique 5 est fixé conjointement avec le pulvérisateur 4 sur un support mobile 11. Le support 11 est monté à coulissement sur des colonnes 21 rigidement reliées à un montant 101 du bâti 10 sous l'action d'un vérin de commande 12. Un contrepoids 13 attelé au support 11 au moyen d'un câble 131 équilibre le support 11 au cours des déplacements de ce dernier le long des colonnes 21.

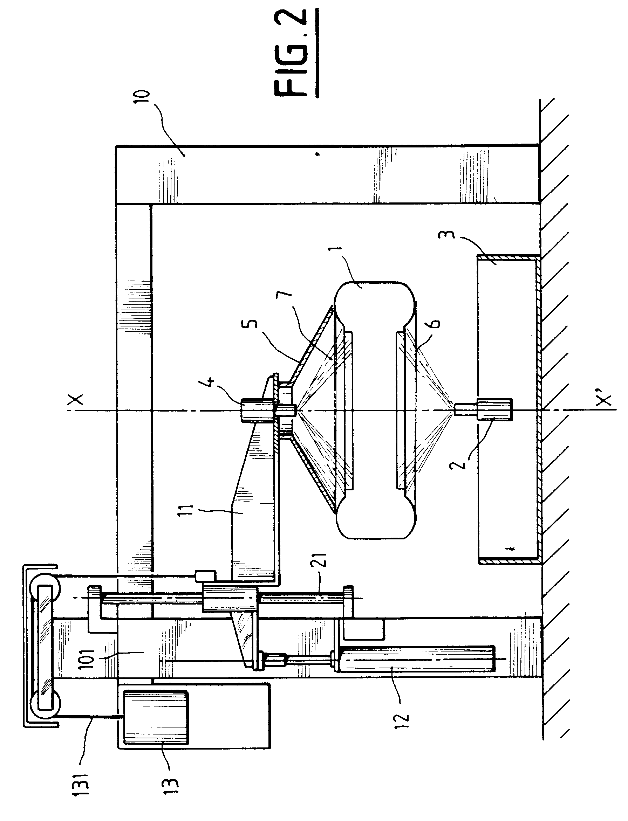

La figure 2 montre le pulvérisateur 4 du talon supérieur en position basse, tandis que le déflecteur conique 5 repose sur le pneu 1. Les jets divergents coniques de produit lubrifiant sont représentés en 6 et 7.

On décrira maintenant le cycle de fonctionnement du dispositif représenté. En début de cycle, l'ensemble constitué par le pulvérisateur 4, le déflecteur 5 et le support 11 est en position haute. Le pneu 1 est positionné sur l'axe XX' des deux pulvérisateurs 2, 4 par les moyens de manutention non représentés. Le support 11 descend et amène le pulvérisateur 4 et le déflecteur 5 en position basse au contact du pneu. La pulvérisation commence. Les jets divergents coniques humectent les talons du pneu. Puis la pulvérisation s'arrête, le support 11 est remonté sous l'action du vérin 12 et les moyens de manutention évacuent le pneu. Un nouveau cycle peut commencer.

Le dispositif précité est programmé pour fonctionner en synchronisation avec les autres postes de l'installation de montage des roues.

Dans la réalisation décrite, le produit lubrifiant est préparé dans une unité de dosage, mélangé et mis en pression. Une telle unité est communément utilisée dans les installations de peinture.

On voit que l'excès de produit lubrifiant déposé sur les talons du pneu, ainsi que le produit d'égouttage des buses des pulvérisateurs sont recueillis dans le bac 3. Le bâti 10 et les moyens de manutention sont protégés des projections par le déflecteur 5.

Selon une variante de la réalisation décrite, le dispositif peut-être équipé de deux déflecteurs, de part et d'autre du pneu.

## Revendications

1. Dispositif de lubrification des talons de pneus avant leur pose sur les roues caractérisé par le fait qu'il comporte, un bâti (10) vertical, deux pulvérisateurs (2,4) de produit lubrifiant solidaires dudit bâti, respectivement fixe (2) et mobile (4), qui fournissent des jets de produit lubrifiant (6,7), un élément déflecteur de jet (5) porté par le pulvérisateur mobile (4), et un moyen (3) de récupération de l'excès de produit lubrifiant.

2. Dispositif selon la revendication 1 caractérisé par le fait que les buses des pulvérisateurs (2,4) délivrent un jet divergent conique.

3. Dispositif selon l'ensemble des revendications précédentes, caractérisé par le fait que le déflecteur (5), de configuration conique, est fixé sur un support (11) mobile verticalement et que ce dernier porte le pulvérisateur (4) du talon supérieur d'un pneu (1) disposé horizontalement entre les deux pulvérisateurs fixe et mobile (2, 4).

4. Dispositif selon l'une quelconque des revendications précédentes caractérisé par le fait qu'un bac de récupération (3) de l'excès de produit lubrifiant est disposé sous le pulvérisateur (2) du talon inférieur du pneu (1).

## Claims

1. Device for lubrication of beads of tyres before they are mounted on the wheels, characterised by the fact that it comprises a vertical supporting member (10), two lubricant sprayers (2, 4) integral with said supporting member, one fixed (2) and one moveable (4), which supply jets of lubricant (6, 7), a jet deflector element (5) carried by the moveable sprayer (4) and a means (3) for recovery of the excess lubricant.

2. Device according to claim 1, characterised by the fact that the nozzles of the sprayers (2, 4) deliver a conically diverging jet.

3. Device according to all of the preceding claims, characterised by the fact that the deflector (5), of conical configuration, is fixed on a vertically mobile support (11) and that the latter carries the sprayer (4) for the upper bead of a tyre (1) arranged horizontally between the two fixed and moveable sprayers (2, 4).

4. Device according to any one of the preceding claims, characterised by the fact that a recovery tank (3) for the excess lubricant is arranged below the sprayer (2) for the lower bead of the tyre (1).

## Patentansprüche

1. Vorrichtung zum Schmieren von Reifenwülsten vor der Radmontage, dadurch gekennzeichnet, daß sie ein senkrechtes Gestell (10) aufweist, zwei mit dem Gestell verbundene Zerstäuber (2, 4) für das Schmiermittel aufweist, wobei einer (2) feststeht und der andere (4) beweglich ist und welche Schmiermittelströme (6, 7) abgeben, ein Ablenkteil (5) für die Ströme am beweglichen Zerstäuber (4) und eine Anordnung (3) zum Auffangen von überschüssigem Schmiermittel aufweist.

2. Vorrichtung nach Anspruch 1, dadurch gekennzeichnet, daß die Düsen der Zerstäuber (2, 4) konisch auseinanderstrebende Ströme abgeben.

3. Vorrichtung nach der Gesamtheit der vorhergehenden Ansprüche, dadurch gekennzeichnet, daß das konisch ausgestaltete Ablenkteil (5) an einer in senkrechter Richtung beweglichen Halterung (11) befestigt ist und daß letztere den Zerstäuber (4) für die obere Wulst eines Reifens (1) trägt, der waagrecht zwischen dem feststehenden und dem beweglichen Zerstäuber (2, 4) angeordnet ist.

4. Vorrichtung nach einem der vorhergehenden Ansprüche, dadurch gekennzeichnet, daß eine Auffangwanne (3) für überschüssiges Schmiermittel unterhalb des Zerstäubers (2) für den unteren Wulst des Reifens (1) vorgesehen ist.
